# FASCICULE DE BREVET EUROPEEN

(11) **EP 3 171 066 B1**
(45) Date de publication et mention de la délivrance du brevet: **14.03.2018**
(21) Numéro de dépôt: 16195902.8
(22) Date de dépôt: 27.10.2016
(51) Int. Cl.: F16L 37/088, F16L 37/12

(54) **RACCORD TUBULAIRE SECURISE A CONNEXION AUTOMATIQUE**
GESICHERTER ROHRANSCHLUSS MIT AUTOMATISCHER VERBINDUNG
SECURE TUBULAR COUPLING WITH AUTOMATIC CONNECTION

(30) Priorité: 20.11.2015 FR 1561186
(43) Date de publication de la demande: 24.05.2017
(73) Titulaire: A Raymond Et Cie, 38000 Grenoble (FR)
(72) Inventeur: CHAUPIN, Jérôme, 38330 Saint Pierre d'Allevard (FR); POGGI, Frédéric, 38600 Fontaine (FR)
(74) Mandataire: Prugneau, Philippe

(56) Documents cités:
- CN-U- 204 664 684
- FR-A1- 2 910 109
- US-A1- 2008 150 280
- US-A1- 2012 326 435

## Description

### Domaine technique

La présente invention se rapporte au domaine des raccords tubulaires pour connecter des tuyaux ou conduites de fluides, par exemple des durites à carburant pour véhicules automobiles.

Plus particulièrement, l'invention concerne un raccord tubulaire comprenant un connecteur femelle avec un corps définissant un orifice dans lequel un connecteur mâle pourvu d'une collerette annulaire est destiné à être inséré suivant une direction axiale, et un élément de connexion qui s'étend suivant une direction transversale dans un évidemment du corps du connecteur femelle et qui est conçu pour être déformé élastiquement radialement vers l'extérieur du connecteur femelle par interférence mécanique avec la collerette lors de l'insertion du connecteur mâle dans le connecteur femelle et, en réaction à cette déformation élastique radiale, se déplacer par lui-même suivant la direction transversale vers l'intérieur du connecteur femelle.

### Technique antérieure

Un tel raccord tubulaire pour raccorder des durites est déjà connu notamment des documents de brevet CN 204664684 U, WO 2015/177472 et US 2012/0326435.

Dans le raccord tubulaire connu du document US 2012/0326435, l'élément de connexion constitue un élément de retenue pour bloquer le connecteur mâle en position quand il est complètement enfoncé dans le connecteur femelle, en formant un verrou qui s'étend transversalement dans le connecteur femelle derrière la collerette du connecteur mâle de manière à le bloquer axialement.

L'élément de connexion ou de retenue comprend deux pattes écartées l'une de l'autre, comme une sorte de cavalier en forme de U, qui s'étendent suivant une direction transversale à l'intérieur du connecteur femelle, chaque patte ayant une face frontale d'interférence avec la collerette du connecteur mâle.

L'élément de connexion est d'abord positionné dans le connecteur femelle dans une position haute de pré-assemblage dans laquelle la base du U saille à l'extérieur du connecteur femelle et les deux pattes de l'élément de connexion s'étendent sensiblement de part et d'autre du connecteur mâle à l'avant de la collerette de celui-ci (si on considère que l'avant de la collerette correspond à la face frontale de la collerette la plus en aval suivant la direction axiale dans le sens d'insertion du connecteur mâle dans le connecteur femelle).

Lorsque le connecteur mâle est enfoncé axialement dans le connecteur femelle, la face avant de la collerette du connecteur mâle vient alors interférer avec une face avant frontale des pattes de l'élément de connexion qui est oblique par rapport à la direction axiale et également par rapport à la direction transversale. Il s'ensuit un écartement radial élastique des pattes de l'élément de connexion par réaction à la force de poussée qui s'exerce axialement sur cette face avant frontale oblique et un déplacement transversal de l'élément de connexion dans l'élément femelle par réaction à la force de poussée qui s'exerce transversalement sur cette face avant frontale oblique. Lors de l'écartement radial élastique, les pattes élastiques accumulent de l'énergie de rétractation. L'écartement maximum des pattes élastiques pendant le déplacement transversal de l'élément de connexion correspond au diamètre de la collerette.

Lors de la descente de l'élément de connexion dans le connecteur femelle, les pattes s'écartent sur la collerette jusqu'à atteindre l'écartement maximum à savoir le diamètre de la collerette. Puis, une fois le diamètre passé et grâce à l'énergie accumulée par l'écartement élastique, les pattes se rétractent selon une composante de force de poussée qui s'étend suivant la direction transversale et le déplacement transversal de l'élément de connexion continue brièvement vers l'intérieur du connecteur femelle.

On obtient ainsi un raccord à connexion automatique.

L'élément de connexion dans ce raccord tubulaire connu comporte en outre un cadre fixe s'étendant transversalement dans le connecteur femelle parallèlement aux pattes de l'élément de connexion et qui comprend à sa base une languette élastique qui s'étend de manière oblique par rapport à la direction axiale du connecteur femelle.

Cette languette est agencée de telle sorte que lors de l'enfoncement axial du connecteur mâle dans le connecteur femelle, le connecteur mâle pousse la languette pour la déplacer axialement par rapport à sa base. De ce fait, la languette élastique emmagasine par compression une énergie, et lors du franchissement du diamètre de la collerette par les pattes élastiques de l'élément de connexion pendant son déplacement transversal, la languette est libérée et produit une force de poussée sur l'élément de connexion qui tend à le déplacer vers l'intérieur du connecteur femelle suivant la direction transversale.

L'élément de connexion est alors dans sa position basse de retenue dans laquelle il forme un verrou empêche un déplacement axial du connecteur mâle dans le connecteur femelle. Dans cette position basse, l'élément de connexion apparaît quasiment escamoté dans le connecteur femelle. La languette permet donc de prolonger l'enfoncement de l'élément de connexion dans le connecteur femelle après franchissement du diamètre de la collerette du connecteur mâle lors de son déplacement transversal.

Ce raccord tubulaire connu présente cependant plusieurs inconvénients.

D'abord, il nécessite plusieurs pièces séparées qui interagissent entre elles pour réaliser la retenue ou le blocage du connecteur mâle dans le connecteur femelle et le déplacement automatique de l'élément de connexion vers l'intérieur du connecteur femelle.

Ces différentes pièces nécessitent une coordination cinématique complexe entre elles. Elles augmentent aussi les coûts de fabrication du raccord tubulaire. Ce raccord tubulaire présente également un corps très ajouré ce qui le rend moins robuste.

Ensuite, la course de l'élément de connexion, après franchissement de la collerette, dépend de la grandeur de la déformation de la languette et en pratique cette course est relativement faible du fait de la miniaturisation des pièces.

Il en résulte que l'écart entre la position haute de pré-assemblage et la position basse de l'élément de connexion est faible et donc cet écart est difficilement perceptible que ce soit sur le plan visuel ou sur le plan tactile.

De plus il est connu que dans les raccords tubulaires existants lorsque l'élément de connexion est en position basse dans le connecteur femelle, les pattes subissent des contraintes mécaniques qui perdurent entrainant une usure de l'élément, et qu'en cas de chauffe du raccord tubulaire, une dégradation par fluage est possible.

Enfin, les raccords tubulaires doivent être mieux sécurisés car il est connu qu'en tirant axialement le connecteur mâle tout en retirant le verrou, il est possible de déconnecter le connecteur mâle du connecteur femelle.

### Résumé de l'invention

Le but de l'invention est donc de pallier les inconvénients indiqués plus haut.

A cet effet, l'invention a pour objet un raccord tubulaire comprenant un connecteur femelle avec un corps définissant un orifice dans lequel un connecteur mâle pourvu d'une collerette annulaire est destiné à être inséré suivant une direction axiale, et un élément de connexion qui s'étend suivant une direction transversale dans un évidemment du corps du connecteur femelle et qui est conçu pour être déformé élastiquement radialement vers l'extérieur du connecteur femelle par interférence mécanique avec la collerette lors de l'insertion du connecteur mâle dans le connecteur femelle et, en réaction à cette déformation élastique radiale, se déplacer par lui-même suivant la direction transversale vers l'intérieur du connecteur femelle, l'élément de connexion comprenant au moins un crochet de verrouillage qui coopère avec un cran de verrouillage prévu dans le corps du connecteur femelle, ce crochet se fermant sur le cran en position de verrouillage quand l'élément de connexion est complètement enfoncé dans le corps du connecteur femelle, **caractérisé** en ce que l'élément de connexion et le corps du connecteur femelle sont conçus pour que lors de l'inférence mécanique, le crochet de verrouillage soit d'abord projeté axialement dans le corps du connecteur femelle avant la déformation radiale de l'élément de connexion de sorte qu'en réaction aux déformations élastiques axiale et radiale de l'élément de connexion, le crochet réalise un contournement du cran de verrouillage pour atteindre la position de fermeture sur le cran de verrouillage.

Le raccord selon l'invention peut présenter les particularités suivantes :
- l'élément de connexion se présente sous forme d'un double cavalier, avec un premier cavalier en forme de U formant un verrou pour la collerette et un second cavalier en forme de U formant une mâchoire, les cavaliers étant reliés entre eux à la base des U, le second cavalier en forme de U comprenant deux branches munies chacune d'un crochet de verrouillage ayant son ouverture orientée radialement ;
- en position partiellement enfoncée de l'élément de connexion dans le corps du connecteur femelle, l'ouverture de chaque crochet est disposée au dessus d'un cran de verrouillage qui forme une butée pour l'élément de connexion, et en ce que dans l'évidement du corps du connecteur femelle chaque cran est disposé dans une zone de dégagement dans laquelle chaque crochet effectue son déplacement axial et de contournement du cran ;
- chaque crochet de l'élément de connexion est muni d'un doigt de retenue qui empêche l'élément de connexion de se déplacer transversalement dans la zone de dégagement à l'intérieur de l'évidement du connecteur femelle ;

- la face frontale d'interférence de chaque branche est formée par une surface oblique par rapport à la direction axiale qui est agencée en dessous de la médiane de l'orifice axial du connecteur femelle pour interférer avec la collerette du connecteur mâle.
- chaque branche de l'élément de connexion comporte une face dorsale opposée à la face frontale d'interférence, qui est munie d'un pion d'appui de l'élément de connexion sur le corps du connecteur femelle pour forcer la branche à vriller sous l'effet de l'interférence mécanique du connecteur mâle sur l'élément de connexion ;
- l'élément de connexion quand il est complètement inséré dans l'évidement du connecteur femelle, affleure la surface extérieure du corps du connecteur femelle et dans cette position masque un témoin visuel de contrôle de bon montage apposé sur l'élément de connexion ;
- il comprend en outre une agrafe conçue pour être insérée dans l'élément de connexion quand l'élément de connexion est complètement inséré dans le corps du connecteur femelle, cette agrafe servant de témoin de contrôle de bon montage du raccord.

L'idée à la base de l'invention est donc de transformer efficacement l'énergie qui est libérée par l'élément de connexion lors de sa rétractation élastique radiale et axiale en une force de poussée orientée et contrôlée dans la direction transversale de déplacement de l'élément de connexion vers l'intérieur du connecteur femelle, et de verrouiller de façon sécurisée l'élément de connexion au connecteur femelle.

Avec l'agencement selon l'invention, on peut avoir un écart de positionnement de l'élément de connexion entre une position haute de pré-assemblage et une position basse de verrouillage qui est suffisamment important pour constituer un témoin fiable de contrôle visuel ou tactile du raccordement complet du connecteur mâle dans le connecteur femelle.

Par ailleurs, l'agencement selon l'invention peut être mis en oeuvre dans un corps de connecteur femelle qui reste relativement fermé (c'est à dire qui est peu ajouré) ce qui permet de réduire les effets de dépôts de sources de contaminants comme la poussière à l'intérieur du connecteur femelle et d'augmenter la robustesse du corps.

D'autres caractéristiques, avantages et détails de la présente invention ressortiront à la lecture de la description suivante d'un exemple de réalisation de l'invention donné à titre illustratif et non limitatif, cette description étant réalisée en référence avec les dessins présentés ci-dessous.

### Présentation sommaire des dessins

La présente invention sera mieux comprise et d'autres avantages apparaîtront à la lecture de la description qui suit et des dessins annexés dans lesquels :
- les figures 1 et 2 illustrent de façon schématique deux vues éclatées du raccord tubulaire selon l'invention comportant un connecteur femelle, une bague interne au connecteur femelle, un élément de connexion et illustrant aussi un connecteur mâle sur la figure 1 ;
- les figures 3A et 3B illustrent respectivement selon une vue de profil et une vue en double coupes transversales le raccord tubulaire selon l'invention en position de pré-assemblage ;
- les figures 4A et 4B illustrent respectivement selon une vue de profil et une vue en coupe transversale le raccord tubulaire selon l'invention dans un premier état d'interférence mécanique avec le connecteur mâle et la figure 4C est un agrandissement d'une partie de la figure 4A ;
- les figures 5A et 5B illustrent respectivement selon une vue de profil et une vue en double coupes transversales le raccord tubulaire selon l'invention dans un second état d'interférence mécanique avec le connecteur mâle ;
- les figures 6A et 6B illustrent respectivement selon une vue de profil et une vue en double coupes transversales le raccord tubulaire selon l'invention dans un premier état intermédiaire de descente de l'élément de connexion dans le connecteur femelle ;
- les figures 7A et 7B illustrent respectivement selon une vue de profil et une vue en double coupes transversales le raccord tubulaire selon l'invention dans un second état intermédiaire de descente de l'élément de connexion dans le connecteur femelle ;
- les figures 8A et 8B illustrent respectivement selon une vue de profil et une vue en double coupes transversales le raccord tubulaire connecté selon l'invention ;
- les figures 9A et 9B illustrent respectivement selon une vue de profil et une vue en coupe transversale le raccord tubulaire en position de pré-assemblage selon un mode de réalisation particulier de l'invention avec une agrafe comme témoin de bon montage ;
- les figures 10A et 10B illustrent respectivement selon une vue de profil et une vue en coupe transversale le raccord tubulaire connecté présentant l'agrafe en position haute selon un mode de réalisation particulier de l'invention ;
- les figures 11A et 11B illustrent respectivement selon une vue de profil et une vue en coupe transversale le raccord tubulaire connecté présentant l'agrafe en position basse selon un mode de réalisation particulier de l'invention.

### Description des modes de réalisation

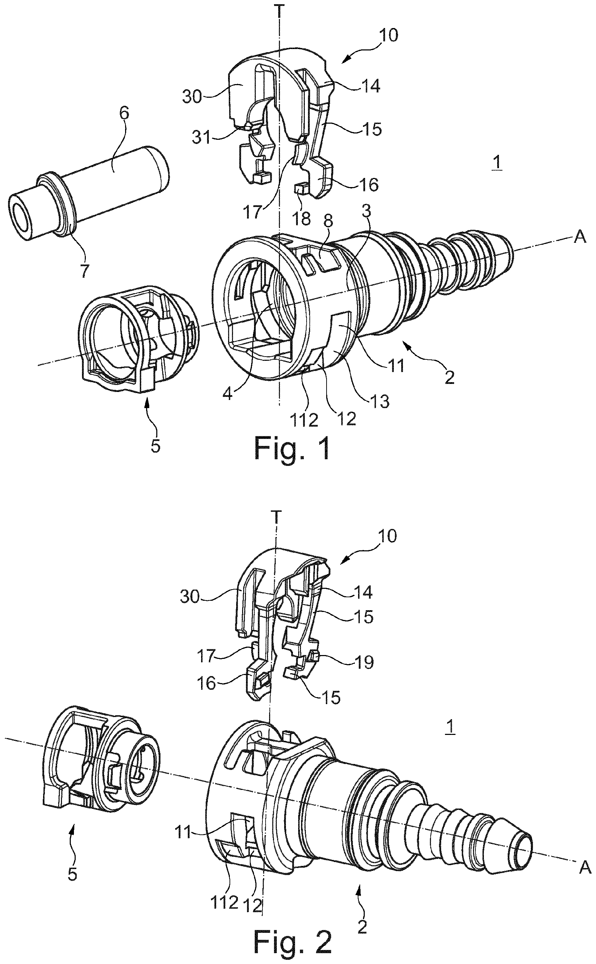

Les figures 1 et 2 présentent une vue éclatée des différentes parties composant le raccord tubulaire 1 selon l'invention. Le raccord tubulaire 1 comporte un embout tubulaire de connexion femelle (connecteur femelle) 2 ici en deux parties comprenant un corps 3 principal de forme tubulaire qui s'étend suivant une direction axiale A et qui est muni d'une ouverture 4 axiale et une bague 5 emboitable axialement dans l'ouverture 4 du corps 3 principal.

Il est entendu que l'invention s'étend à un embout femelle en une seule partie ou monobloc.

Dans le raccord tubulaire 1, un embout tubulaire de connexion mâle (connecteur mâle) 6 est prévu pour s'insérer axialement dans le connecteur femelle 2, ici dans la bague 5.

Le connecteur mâle 6 est en forme de tube cylindrique allongé et présente une collerette 7 annulaire à sa périphérie circulaire, le diamètre de la collerette 7 annulaire étant légèrement inférieur à celui du diamètre intérieur de la bague 5.

Comme visible encore sur la figure 1, le corps 3 du connecteur femelle 2 présente un évidement 8 intérieur profilé faisant apparaître une ouverture radiale 9 sur le dessus qui forme une sorte de glissière dans laquelle vient s'insérer transversalement et coulisser un élément de connexion 10. L'évidement 8 intérieur présente sur sa partie située en dessous de la médiane de l'ouverture axiale 4 deux zones de dégagement 11 agencées symétriquement, sous forme de fentes radiales prévues dans la surface périphérique annulaire du connecteur femelle 2. Ces fentes radiales permettent l'écartement radial de branches (décrites plus loin) de l'élément de connexion 10 à l'intérieur du corps du connecteur femelle 2.

Comme visible sur la figure 2, la zone de dégagement 11 présente sur la partie basse du corps 3 du connecteur femelle 2, un cran 12 de verrouillage agencé axialement et un espace libre 13, adjacent au cran 12. Un autre cran 12 avec un espace libre 13, non visibles sur cette figure sont agencés dans une autre zone de dégagement symétrique à la zone de dégagement 11 visible sur la figure 2.

Le cran 12 de verrouillage peut se présenter sous forme d'un créneau mais peut aussi présenter comme illustré ici une surface oblique inclinée par rapport à la direction transversale d'insertion de l'élément de connexion 10 et servant de rampe pour le glissement de l'élément de connexion 10.

Le corps 3 du connecteur femelle 2 comprend sur sa circonférence extérieure un épaulement, 112 adjacent à chaque cran 12 formant une cale pour l'élément de connexion 10.L'élément de connexion 10 se présente ici comme un double cavalier, avec un premier cavalier en forme de U renversé formant un verrou 30 et un second cavalier en forme de U renversé formant une mâchoire 14. Les deux cavaliers sont reliés entre eux à la base des U.

Le premier cavalier formant le verrou 30 est conçu pour venir à l'arrière de la collerette 7 du connecteur mâle 6 de manière à la retenir et le bloquer suivant la direction axiale quand le connecteur mâle 6 est complètement enfoncé à l'intérieur du connecteur femelle 2. Le verrou 30 présente deux branches espacées l'une de l'autre et s'étendant suivant la direction transversale d'insertion. Les branches du verrou 30 sont profilées de sorte à présenter un rayon de courbure correspondant au diamètre du tube cylindrique du connecteur mâle 6. Les extrémités des branches du verrou 30 présentent chacune un chanfrein 31 s'étendant axialement et incliné vers l'extérieur du verrou 30. L'extrémité de chaque branche du verrou 30 au niveau du chanfrein 31 ne dépasse pas la médiane de l'ouverture axiale 4 du connecteur femelle 2.

Le second cavalier présente deux branches 15 flexibles espacées l'une de l'autre et s'étendant suivant la direction transversale d'insertion. Les deux branches 15 sont profilées pour former des sortes de poutres qui viennent coulisser dans des rainures de la glissière définie par l'évidement 8 radiale. Chaque branche 15 flexible présente à l'extrémité libre un crochet 16 de verrouillage en forme de C, avec l'ouverture du C orientée radialement vers l'intérieur de l'orifice du corps 3 du connecteur femelle 2. Les deux C sont en vis à vis l'un de l'autre. Plus particulièrement, l'extrémité de chaque branche 15 est constituée par la base du C du crochet 16.

Chaque branche 15 flexible de l'élément de connexion 10 présente une face frontale qui fait face à la collerette 7 du connecteur mâle 6 quand celui-ci est engagé dans le connecteur femelle 2, appelée face frontale d'interférence avec la collerette 7.

La face frontale de chaque branche 15 comporte dans sa partie située en dessous de la médiane de l'ouverture axiale 4 du connecteur femelle 2, une surface oblique ou palpeur 17, inclinée par rapport à la direction axiale d'insertion du connecteur mâle 6, orientée vers l'intérieur de l'orifice 4 du connecteur femelle 2, qui, quand l'élément de connexion 10 est dans une position haute de pré-assemblage à l'intérieur du connecteur femelle 2, est destinée à interférer avec la face avant de la collerette 7 du connecteur mâle 6 quand celui-ci est enfoncé dans le connecteur femelle 2.

Du coté de la face frontale, les crochets présentent chacun sur la base du C un doigt 18 de retenue ou ergot qui se projette axialement à partir de la face frontale dont la fonction sera expliquée plus loin. L'épaisseur totale du crochet 16 et du doigt de retenue 18 suivant la direction axiale A est supérieure à l'espace libre 13 adjacent au cran 12.

Selon un mode de réalisation particulier, un pion 19 se projette axialement à partir de la face dorsale de chaque branche 15 flexible de l'élément de connexion 10, au niveau de la partie médiane du C du crochet 16, comme visible sur la figure 2. La fonction des pions 19 sera expliquée plus loin.

Comme il sera expliqué par la suite, les branches 15 flexibles de l'élément de connexion 10 sont agencées pour que l'élément de connexion 10 se déplace par lui-même vers l'intérieur du connecteur femelle 2 suivant la direction transversale T grâce à une force de poussée qui est produite par réaction à une déformation élastique axiale puis radiale des branches 15 flexibles qui survient lors de l'enfoncement du connecteur mâle 6 dans le connecteur femelle 2.

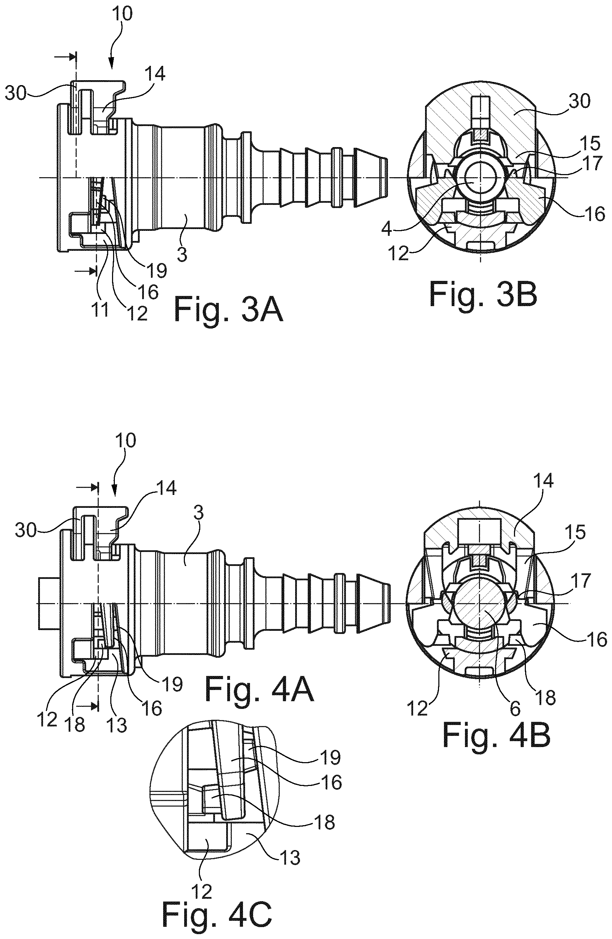

Sur les figures 3A et 3B, l'élément de connexion 10 est en position haute de pré-assemblage dans le connecteur femelle 2. En position haute de pré-assemblage de l'élément de connexion 10, le haut de l'élément de connexion 10 saille de façon suffisamment importante par rapport à la surface extérieure supérieure du connecteur femelle 2, par exemple de l'ordre de 3 à 4mm, pour qu'un opérateur puisse différencier de manière sûre par contrôle tactile ou contrôle visuel la position haute de pré-assemblage de l'élément de connexion 10 d'une position basse de verrouillage de l'élément de connexion 10 dans le connecteur femelle 2.

Dans cette position haute de pré-assemblage les branches 15 flexibles sont en position de repos, l'ouverture de chaque crochet 16 de l'élément de connexion 10 étant disposée au dessus de chaque cran 12 de verrouillage dans le corps 3 du connecteur femelle 2 qui forme une butée pour l'élément de connexion 10. Ainsi, l'élément de connexion 10 ne peut pas être inséré transversalement inopinément.

La cinématique du déplacement de l'élément de connexion 10 par lui-même dans le connecteur femelle 2 est maintenant illustrée sur les figures 4 à 8.

Sur les figures 4A, 4B et 4C, le connecteur mâle 6 est inséré partiellement dans le connecteur femelle 2.

La périphérie supérieure de la collerette 7 du connecteur mâle est ici en contact avec les branches du verrou 30 de l'élément de connexion 10, au niveau des chanfreins 31. En poussant axialement le connecteur mâle 6 dans l'orifice du connecteur femelle 2, la collerette 7 exerce une interférence mécanique selon une pression suivant la direction axiale sur les palpeurs 17 des branches 15 flexibles de l'élément de connexion 10. Cette poussée axiale provoque un déplacement axial des branches 15 flexibles mais ne provoque pas ici d'écartement radial des branches 15 du fait que les doigts de retenue 18 sur la face frontale des crochets 16 se trouvent encore en butée sur les crans 12 de verrouillage du corps 3 du connecteur femelle 2 et empêchent l'élément de connexion 10 de passer transversalement dans la zone de dégagement 11 à l'intérieur de l'évidement 8 du connecteur femelle 2.

Le déplacement axial maximal des branches 15 est obtenu lorsque la face dorsale des branches 15 flexibles se trouvent en butée axiale avec l'intérieur du corps 3 du connecteur femelle 2. Selon un mode de réalisation particulier où des pions 19 d'appui sont agencés sur la face dorsale des branches 15, le déplacement axial maximal est obtenu lorsque les pions 19 se trouvent en butée avec l'intérieur du corps 3 du connecteur femelle 2, comme cela est visible sur l'agrandissement de la figure 4C. Dans ce cas particulier, les branches 15 ont tendance à vriller sous l'effet de l'interférence mécanique du connecteur mâle 6 sur l'élément de connexion 10.

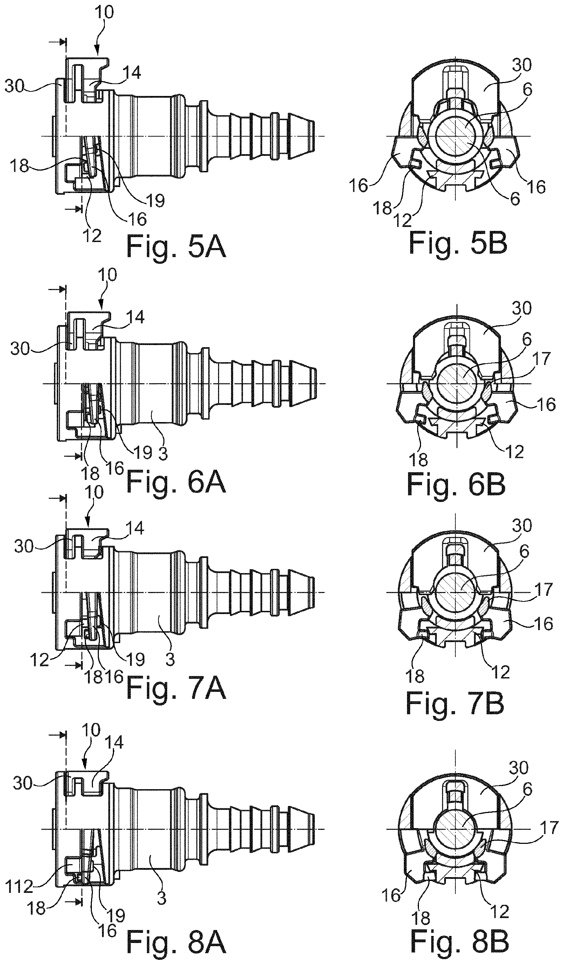

Comme visible sur les figures 5A et 5B, le connecteur mâle 6 a maintenant été enfoncé un peu plus dans le connecteur femelle 2. La collerette 7 exerce toujours une pression axiale sur les palpeurs 17 mais les branches 15 se trouvant en butée avec le corps 3 du connecteur femelle 2, s'écartent maintenant radialement jusqu'à atteindre un écartement maximal comme visible sur la figure 5B. Dans cette configuration d'écartement des branches 15 flexibles, il est bien visible sur cette figure 5B que les crochets 16 se trouvent au-delà des crans 12 de verrouillage et lors de la descente transversale de l'élément de connexion 10 dans le connecteur femelle 2 les crochets 16 réalisent un contournement (décrit plus loin) des crans 12 de verrouillage dans la zone de dégagement 11 du connecteur femelle 2.

En enfonçant encore plus le connecteur mâle 6 dans le connecteur femelle 2, la collerette 7 perd le contact avec les palpeurs 17 de l'élément de connexion 10, les branches 15 se rétractent en glissant diamétralement sur la face arrière de la collerette 7. La collerette 7 se retrouve bloquée derrière les branches du verrou 30 et est calée entre les branches 15 flexibles rétractées.

Lorsque les branches 15 flexibles se rétractent élastiquement, elles se rapprochent radialement l'une de l'autre mais aussi se rétractent axialement, dans le sens opposé au sens d'insertion de l'élément de connexion 10, pour revenir dans leur position de repos initial. Cette double rétractation entraine une force de poussée sur l'élément de connexion 10 de sorte que l'élément de connexion 10 se déplace transversalement par lui-même dans l'évidement 8, vers l'intérieur du connecteur femelle 2, comme illustré sur les figures 6 et 7, jusqu'à atteindre une position basse de retenue et de verrouillage dans le connecteur femelle 2.

Pour réaliser le contournement cité précédemment, il faut comprendre que les crochets 16 réalisent un premier déplacement par projection axiale, puis subissent un écartement radial. Lorsque le connecteur mâle 6 est complètement enfoncé dans le connecteur femelle 2, les crochets 16 reviennent dans une position de repos suivant une direction axiale de sorte que les crochets 16 viennent s'engager radialement sur le coté latéral des crans 12 et se calent par déplacement radial sous les crans 12, avec les doigts de retenue 18 qui viennent se loger sous les épaulements 112.

La position basse de l'élément de connexion 10 est illustrée sur les figures 8A et 8B. Dans cette position basse on peut voir que les crans 12 se retrouvent logés dans les formes en C des crochets 16. Dans cette position, l'élément de connexion 10 ne peut plus remonter transversalement dans le corps 3 du connecteur femelle 2. Le connecteur mâle 6 est bloqué axialement dans le connecteur femelle 2. De part cet agencement, le raccord tubulaire 1 est totalement sécurisé.

De plus, dans cette position basse de retenue, le haut de l'élément de connexion 10 (c'est à dire la base des U du double cavalier) affleure la surface extérieure (ici la surface supérieure) du connecteur femelle 2.

On comprendra que selon l'invention, le mécanisme de déplacement transversal de l'élément de connexion 10 est totalement interne dans le connecteur femelle 2, ce qui permet de réduire l'encombrement du raccord tubulaire 1.

On peut aussi prévoir dans le raccord tubulaire 1 selon l'invention, un témoin visuel de contrôle de l'enfoncement complet du connecteur mâle 6 dans le connecteur femelle 2 sous la forme d'un marquage apposé sur l'élément de connexion 10 qui est recouvert et donc masqué lors de son insertion dans le connecteur femelle 2.

L'élément de connexion 10 dans le raccord tubulaire 1 sécurisé à connexion automatique selon l'invention peut s'adapter à des connecteurs mâles 6 de différents profils ou de différents diamètres ainsi qu'à des collerettes 7 de rayons différents.

Le raccord tubulaire 1 selon l'invention comprend peu de pièces distinctes lesquelles peuvent toutes être réalisées en matière plastique, par exemple par moulage par injection ou par impression 3D.

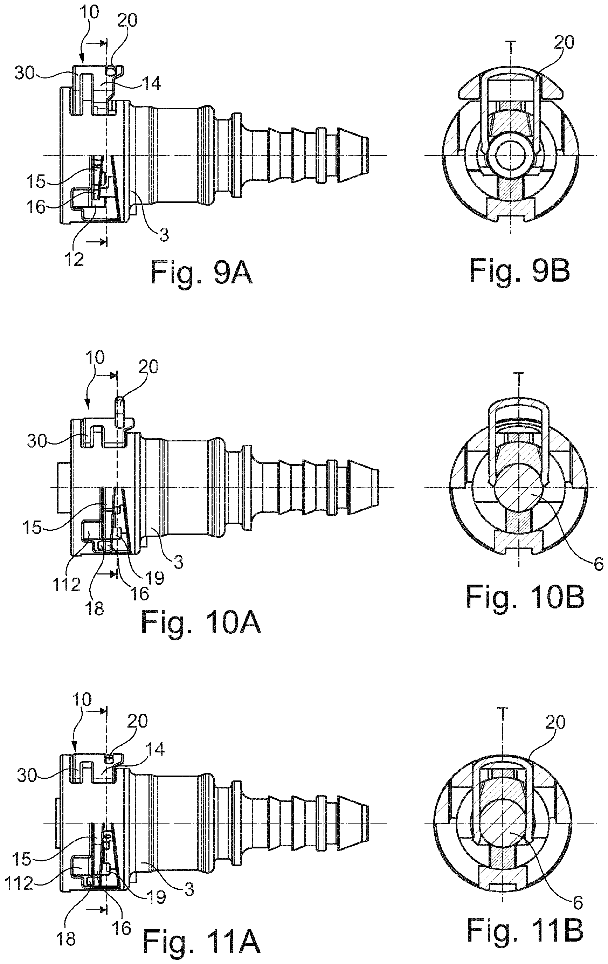

Selon une variante de réalisation de l'invention représentée sur les figures 9A à 11B, on peut prévoir dans le raccord tubulaire 1 une agrafe 20 jouant le rôle d'un témoin de montage du raccord en deux temps. Sur les figures 9A et 9B l'élément de connexion 10 est en position haute de pré-assemblage. Lorsque le connecteur mâle 6 est correctement inséré dans le connecteur femelle 2, l'agrafe 20 se trouve en saillie du raccord, c'est-à-dire en position haute, comme visible sur les figures 10A et 10B, et permet une première vérification visuelle et/ou tactile du bon montage du raccord par un opérateur.

Une deuxième vérification est ensuite effectuée par un second opérateur qui constate à son tour le positionnement en saillie de l'agrafe 20 et l'enfonce manuellement dans le raccord jusqu'à ce qu'elle ne soit plus en saillie, c'est-à-dire en position basse, comme visible sur les figures 11A et 11B.

Cette vérification en deux temps permet de constater le bon montage du raccord et limite ainsi les erreurs de montage en chaîne d'assemblage.

L'agrafe 20 se présente ici sous la forme d'un cavalier formé par deux pattes sensiblement flexibles et parallèles, comme visibles sur les figures 9A à 11B.

Les pattes de l'agrafe 20 sont conçues pour être insérées chacune dans une fente 21 de l'élément de connexion 10 prévue à cet effet, selon la direction transversale T visible sur la figure 9B et avant l'insertion du connecteur mâle 6.

Une fois insérées, les pattes flexibles de l'agrafe 20 exercent une force de pression sur le profil interne du connecteur femelle 2 prévenant le retrait non intentionnel de l'agrafe 20.

On comprendra également que lors de l'insertion du connecteur mâle 6 dans le connecteur femelle 2, l'élément de connexion 10 se déplacera transversalement vers l'intérieur du connecteur femelle 2 pour verrouiller le connecteur mâle 6, alors que l'agrafe 20 restera en position haute, en saillie du raccord. Lorsque le connecteur mâle 6 est correctement inséré, les extrémités des pattes de l'agrafe 20 sont posées sur le connecteur mâle 6 empêchant l'agrafe 20 de descendre en position basse sans exercer une force de poussée supplémentaire.

Notons que le mécanisme de descente de l'élément de connexion 10 n'interagit pas avec le mécanisme de descente de l'agrafe 20 puisque l'agrafe 20 est agencée pour être poussée en position basse manuellement par un opérateur.

## Revendications

1. Raccord (1) tubulaire comprenant un connecteur femelle (2) avec un corps (3) définissant un orifice (4) dans lequel un connecteur mâle (6) pourvu d'une collerette (7) annulaire est destiné à être inséré suivant une direction axiale (A), et un élément de connexion (10) qui s'étend suivant une direction transversale (T) dans un évidemment (8) dudit corps (3) dudit connecteur femelle (2) et qui est conçu pour être déformé élastiquement radialement vers l'extérieur dudit connecteur femelle (2) par interférence mécanique avec ladite collerette (7) lors de ladite insertion dudit connecteur mâle (6) dans ledit connecteur femelle (2) et, en réaction à cette déformation élastique radiale, se déplacer par lui-même suivant ladite direction transversale (T) vers l'intérieur dudit connecteur femelle (2), ledit élément de connexion (10) comprenant au moins un crochet (16) de verrouillage qui coopère avec un cran (12) de verrouillage prévu dans ledit corps (3) dudit connecteur femelle (2), ce crochet (16) se fermant sur ledit cran (12) en position de verrouillage quand ledit élément de connexion (10) est complètement enfoncé dans ledit corps (3) dudit connecteur femelle (2), **caractérisé en ce que** ledit élément de connexion (10) et ledit corps (3) dudit connecteur femelle (2) sont conçus pour que lors de ladite inférence mécanique, ledit crochet (16) de verrouillage soit d'abord projeté axialement dans ledit corps (3) dudit connecteur femelle (2) avant ladite déformation radiale dudit élément de connexion (10) de sorte que en réaction auxdites déformations élastiques axiale et radiale dudit élément de connexion (10), ledit crochet (16) réalise un contournement dudit cran (12) de verrouillage pour atteindre ladite position de fermeture sur ledit cran (12) de verrouillage.

2. Raccord (1) selon la revendication 1, **caractérisé en ce que** ledit élément de connexion (10) se présente sous forme d'un double cavalier, avec un premier cavalier en forme de U formant un verrou pour ladite collerette (7) et un second cavalier en forme de U formant une mâchoire (14), lesdits cavaliers étant reliés entre eux à la base des U, ledit second cavalier en forme de U comprenant deux branches (15) munies chacune d'un crochet (16) de verrouillage ayant son ouverture orientée radialement.

3. Raccord (1) selon la revendication 2, **caractérisé en ce que** en position partiellement enfoncée dudit élément de connexion (10) dans ledit corps (3)dudit connecteur femelle (2), ladite ouverture de chaque crochet (16) est disposée au dessus d'un cran (12) de verrouillage qui forme une butée pour ledit élément de connexion (10), et **en ce que** dans ledit évidement (8) dudit corps (3) dudit connecteur femelle (2) chaque cran (12) est disposé dans une zone de dégagement (11) dans laquelle chaque crochet (16) effectue son déplacement axial et de contournement dudit cran (12).

4. Raccord (1) selon la revendication 3, **caractérisé en ce que** chaque crochet (16) dudit élément de connexion (10) est muni d'un doigt (18) de retenue qui empêche ledit élément de connexion (10) de se déplacer transversalement dans ladite zone de dégagement (11) à l'intérieur dudit évidement (8) dudit connecteur femelle (2).

5. Raccord (1) selon la revendication 2, **caractérisé en ce que** ladite face frontale d'interférence de chaque branche (15) est formée par une surface oblique (17) par rapport à ladite direction axiale qui est agencée en dessous de la médiane dudit orifice (4) axial dudit connecteur femelle (2) pour interférer avec ladite collerette (7) dudit connecteur mâle (6).

6. Raccord (1) selon la revendication 3, **caractérisé en ce que** chaque branche (15) dudit élément de connexion (10) comporte une face dorsale opposée à ladite face frontale d'interférence, qui est munie d'un pion (19) d'appui dudit élément de connexion (10) sur ledit corps (3) dudit connecteur femelle (2) pour forcer ladite branche (15) à vriller sous l'effet de ladite interférence mécanique dudit connecteur mâle (6) sur ledit élément de connexion (10).

7. Raccord (1) selon l'une des revendications précédentes, **caractérisé en ce que** ledit élément de connexion (10) quand il est complètement inséré dans ledit évidement (8) dudit connecteur femelle (2), affleure la surface extérieure dudit corps (3) dudit connecteur femelle (2) et dans cette position masque un témoin visuel de contrôle de bon montage apposé sur ledit élément de connexion (10).

8. Raccord (1) selon l'une des revendications 1 à 7, **caractérisé en ce qu'**il comprend en outre une agrafe (20) conçue pour être insérée dans ledit élément de connexion (10) quand ledit élément de connexion (10) est complètement inséré dans ledit corps (3) dudit connecteur femelle (2), cette agrafe (20) servant de témoin de contrôle de bon montage dudit raccord (1).

## Patentansprüche

1. Rohrförmiger Anschluss (1), umfassend einen weiblichen Verbinder (2) mit einem Korpus (3), der eine Öffnung (4) definiert, in die ein mit einem ringförmigen Kragen (7) versehener männlicher Verbinder (6) dazu bestimmt ist, gemäß einer axialen Richtung (A) eingeführt zu werden, und ein Verbindungselement (10), das sich gemäß einer querverlaufenden Richtung (T) in einer Ausnehmung (8) des Korpus (3) des weiblichen Verbinders (2) erstreckt und das ausgebildet ist, um durch mechanisches Eingreifen mit dem Kragen (7) beim Einsetzen des männlichen Verbinders (6) in den weiblichen Verbinder (2) elastisch radial von dem weiblichen Verbinder (2) nach außen deformiert zu werden, und in Reaktion auf diese radiale elastische Deformation, sich selbsttätig der Querrichtung (T) folgend zu dem Inneren des weiblichen Verbinders (2) zu verlagern, wobei das Verbindungselement (10) wenigstens einen Verriegelungshaken (16) umfasst, der mit einer in dem Korpus (3) des weiblichen Verbinders (2) vorgesehenen Verriegelungsraste (12) zusammenwirkt, wobei der Haken (16) sich auf der Raste (12) in Verriegelungsposition verschließt, wenn das Verbindungselement (10) vollständig in den Korpus (3) des weiblichen Verbinders (2) eingedrückt ist,
**dadurch gekennzeichnet,**
**dass** das Verbindungselement (10) und der Korpus (3) des weiblichen Verbinders (2) ausgebildet sind, dass bei dem mechanischen Eingreifen der Verriegelungshaken (16) zunächst axial in den Korpus (3) des weiblichen Verbinders (2) vorgeführt wird, bevor die radiale Deformation des Verbindungselements (10) derart erfolgt, dass in Reaktion auf die axialen und radialen elastischen Deformationen des Verbindungselements (10) der Haken (16) eine Umgehung der Verriegelungsraste (12) ausführt, um die Schließposition auf der Verriegelungsraste (12) zu erreichen.

2. Anschluss (1) nach Anspruch 1, **dadurch gekennzeichnet, dass** das Verbindungselement (10) die Gestalt einer doppelten Krampe aufweist, mit einer ersten U-förmigen Krampe, die einen Riegel für den Kragen (7) bildet, und einer zweiten U-förmigen Krampe, die eine Backe (14) bildet, wobei die Krampen untereinander an der Basis der U's verbunden sind, wobei die zweite U-förmige Krampe zwei mit jeweils einem Verriegelungshaken (16) mit radial orientierter Öffnung ausgestattete Schenkel (15) aufweist.

3. Anschluss (1) nach Anspruch 2, **dadurch gekennzeichnet, dass** in teilweise eingedrückter Position des Verbindungselements (10) in den Korpus (3) des weiblichen Verbinders (2) die Öffnung jedes Hakens (16) oberhalb einer einen Anschlag für das Verbindungselement (10) bildenden Verriegelungsraste (12) angeordnet ist, und dass in der Ausnehmung (8) des Korpus (3) des weiblichen Verbinders (2) jede Raste (12) in einer Freistellungszone (11) angeordnet ist, in der jeder Haken (16) seine axiale und Umgehungsverlagerung der Raste (12) ausführt.

4. Anschluss (1) nach Anspruch 3, **dadurch gekennzeichnet, dass** jeder Haken (16) des Verbindungselements (10) mit einem Haltefinger (18) ausgestattet ist, der verhindert, dass das Verbindungselement (10) sich quer in der Freistellungszone (11) innerhalb der Ausnehmung (8) des weiblichen Verbinders (2) verlagert.

5. Anschluss (1) nach Anspruch 2, **dadurch gekennzeichnet, dass** die vordere Eingriffsfläche jedes Schenkels (15) durch eine in Bezug auf die axiale Richtung schräge Fläche (17) gebildet ist, die unterhalb des Medians der axialen Öffnung (4) des weiblichen Verbinders (2) ausgebildet ist, um mit dem Kragen (7) des männlichen Verbinders (6) einzugreifen.

6. Anschluss (1) nach Anspruch 3, **dadurch gekennzeichnet, dass** jeder Schenkel (15) des Verbindungselements (10) eine der vorderen Eingriffsseite abgekehrte Rückseite umfasst, die mit einem Abstützvorsprung (19) des Verbindungselements (10) auf dem Korpus (3) des weiblichen Verbinders (2) ausgestattet ist, um den Schenkel (15) dazu zu veranlassen, sich unter dem Eindruck des mechanischen Eingriffs des männlichen Verbinders (6) auf dem Verbindungselement (10) zu verdrehen.

7. Anschluss (1) nach einem der vorherigen Ansprüche, **dadurch gekennzeichnet, dass** das Verbindungselement (10), wenn es vollständig in die Ausnehmung (8) des weiblichen Verbinders (2) eingesetzt ist, die äußere Oberfläche des Korpus (3) des weiblichen Verbinders (2) berührt und in dieser Position einen auf dem Verbindungselement (10) angebrachten optischen Kontrollnachweis der ordnungsgemäßen Montage verbirgt.

8. Anschluss (1) nach einem der Ansprüche 1 bis 7 **dadurch gekennzeichnet, dass** dieser ferner eine Klammer (20) umfasst, die dazu ausgebildet ist, um in das Verbindungselement (10) eingesetzt zu werden, wenn das Verbindungselement (10) vollständig in den Korpus (3) des weiblichen Verbinders (2) eingesetzt ist, wobei die Klammer (20) als Kontrollnachweis der ordnungsgemäßen Montage des Anschlusses (1) dient.

## Claims

1. A tube coupling (1) comprising a female connector (2) having a body (3) defining an orifice (4) into which a male connector (6) having an annular collar (7) is to be inserted along an axial direction (A), and a connection element (10) that extends along a transverse direction (T) in a recess (8) in said body (3) of said female connector (2) and that is designed to be deformed elastically radially towards the outside of said female connector (2) by mechanical interference with said collar (7) during said insertion of said male connector (6) into said female connector (2) and, in reaction to said radial elastic deformation, to move of its own accord along said transverse direction (T) towards the inside of said female connector (2), said connection element (10) comprising at least one locking hook (16) that cooperates with a locking catch (12) provided in said body (3) of said female connector (2), the hook (16) closing on said catch (12) in a locking position when said connection element (10) is fully pushed into said body (3) of said female connector (2), the coupling being **characterized in that** said connection element (10) and said body (3) of said female connector (2) are designed so that, during said mechanical interference, said locking hook (16) is initially projected axially into said body (3) of said female connector (2) before said connection element (10) is deformed radially in such a manner that in reaction to said axial and elastic deformation of said connection element (10), said hook (16) goes around said locking catch (12) in order to reach said closure position on said locking catch (12).

2. A coupling (1) according to claim 1, **characterized in that** said connection element (10) is in the form of two forks, with a first U-shaped fork forming a lock for said collar (7) and a second U-shaped fork forming a yoke (14), said forks being connected together at the bases of the U-shapes, said second U-shaped fork having two branches (15), each provided with a locking hook (16) having its opening facing radially.

3. A coupling (1) according to claim 2, **characterized in that** in a partially pushed-in position of said connection element (10) into said body (3) of said female connector (2), said opening of each hook (16) is located above a locking catch (12) that forms an abutment for said connection element (10), and **in that** in said recess (8) of said body (3) of said female connector (2) each catch (12) is arranged in a clearance zone (11) in which each hook (16) moves axially and goes around said catch (12).

4. A coupling (1) according to claim 3, **characterized in that** each hook (16) of said connection element (10) is provided with a retaining finger (18) that prevents said connection element (10) from moving transversely in said clearance zone (11) inside said recess (8) of said female connector (2).

5. A coupling (1) according to claim 2, **characterized in that** said front interference face of each branch (15) is formed by an oblique surface (17) that slopes relative to said axial direction and that is arranged below the middle of said axial orifice (4) of said female connector (2) in order to interfere with said collar (7) of said male connector (6).

6. A coupling (1) according to claim 3, **characterized in that** each branch (15) of said connection element (10) has a back face opposite from said interference front face, which back face is provided with a peg (19) whereby said connection element (10) bears against said body (3) of said female connector (2) in order to force said branch (15) to twist under the effect of said mechanical interference of said male connector (6) against said connection element (10).

7. A coupling (1) according to any preceding claim, **characterized in that** said connection element (10), when it is fully pushed into said recess (8) of said female connector (2), is flush with the outside surface of said body (3) of said female connector (2), and in this position it masks a visual indicator for verifying proper assembly that is applied to said connection element (10).

8. A coupling (1) according to any one of claims 1 to 7, **characterized in that** it further comprises a clip (20) designed to be inserted in said connection element (10) when said connection element (10) is fully inserted in said body (3) of said female connector (2), said clip (20) serving as an indicator for verifying that said coupling (1) is properly assembled.
